# EUROPEAN PATENT APPLICATION

(11) **EP 4 633 232 A1**
(43) Date of publication of application: **15.10.2025**
(21) Application number: 25170138.9
(22) Date of filing: 11.04.2025
(51) Int. Cl.: H04W 24/10, H04W 72/27

(54) **INTERFERENCE MEASUREMENT WITH COORDINATED BLANKING**

(30) Priority: 12.04.2024 US 202463633128 P; 08.04.2025 US 202519173034
(71) Applicant: Mavenir Systems, Inc., Richardson, TX 75081 (US)
(72) Inventor: Leelahakriengkrai, Rangsan, Allen, 75013 (US); Dev, Abhilash, Bartlett, 60103 (US); Pisek, Eran, Plano, 75025 (US)
(74) Representative: Studio Torta S.p.A.

(57) **Abstract**

A method for measuring radio interference at a center Citizens Broadband Radio Service (CBRS) device (CBSD) of a selected network operator operating one of a 4G Long Term Evolution (LTE) network or a 5G New Radio (NR) network, includes: instructing, by a radio measurement controller, the center CBSD to perform measurement of radio interference caused by an interfering radio source; instructing, by the radio measurement controller, at least one neighboring CBSD to stop radio service for at least one coordinated blank orthogonal frequency-division multiplexing symbol (CBOS), wherein the at least one CBOS is defined by a selected frequency range and a selected blanking time in one of a subframe or a slot in one of a time division duplex (TDD) downlink (DL) configuration or a TDD uplink (UL) configuration; and processing, by an interference processor associated with the center CBSD, the measured radio interference.

## Description

### BACKGROUND

### 1. Field of the Disclosure

The present disclosure is related to 4G and 5G wireless communications systems, and relates more particularly to 4G and 5G Citizens Broadband Radio Service (CBRS).

### 2. Description of Related Art

Citizens Broadband Radio Service (CBRS) is a wireless communication technology that operates in the 3.5 GHz band. CBRS was established by the Federal Communications Commission (FCC) in the United States to create a shared spectrum approach for wireless communication. CBRS is designed to support a wide range of applications, e.g., broadband access, Internet of Things (IoT) devices, and private wireless networks.

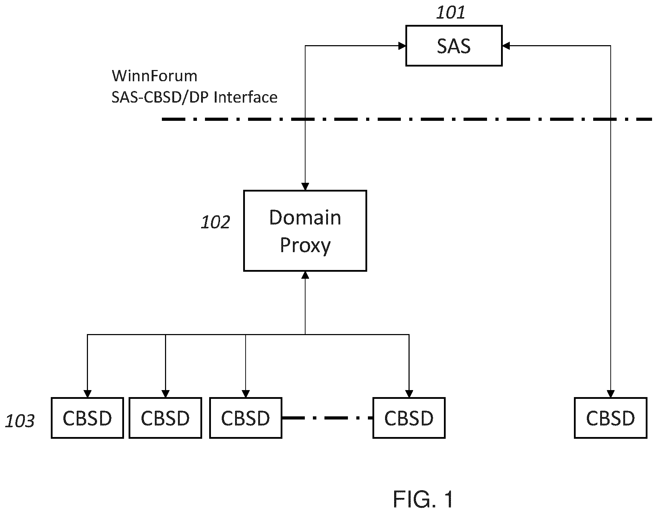

As shown in FIG. 1, which illustrates the CBRS architecture, the spectrum is allocated and controlled by Spectrum Access System (SAS) 101. The CBRS devices (CBSD) 103 and Domain Proxy (DP) 102 have an interface (referenced as "WinnForum SAS-CBSD/DP Interface" in FIG. 1) with the SAS 101 for this function. The interface is defined by WinnForum standard. CBSDs obtain Grants or frequency spectrum from the SAS via the SAS-CBSD interface, which obtaining can be done with the assistance of a DP 102 in the communication path, or directly between SAS 101 and CBSDs 103. The DP 102 is a logical entity engaging in communications with the SAS 101 on behalf of multiple individual CBSDs or networks of CBSDs. The DP 102 can also provide a translational capability to interface legacy radio equipment in the 3650-3700 MHz band with a SAS to ensure compliance with the regulations specified in Title 47 of the Code of Federal Regulations (CFR), § 96 (hereinafter referred to as 47 CFR § 96). The DP 102 presents a consistent and secure interface to the SAS 101 that can convey all messages pertaining to the SAS-CBSD interface for client CBSDs 103. CBSD aggregation and proxy function for large networks can be integrated within a Service Management and Orchestrator (SMO) system or in a standalone node. SAS 101 is a system that authorizes and manages use of spectrum for the CBRS in accordance with the regulations specified in 47 CFR § 96. Once the CBSD 103 acquires Grants from the SAS 101, it can use Long Term Evolution (LTE), New Radio (NR) or any wireless protocol to communicate with its UE. LTE CBRS is a CBRS system that uses LTE as the wireless protocol, and NR CBRS is a CBRS system that uses NR as the wireless protocol.

The CBRS spectrum is divided into three tiers: 1) Incumbent Access; 2) Priority Access License (PAL); and 3) General Authorized Access (GAA). Incumbent Access tier is reserved for the existing government and military users in the 3.5 GHz band. Priority Access License (PAL) tier, which is designed for commercial users who have obtained a license for the frequency band, is used for large-scale wireless networks and high-speed broadband. General Authorized Access (GAA) tier, which is available for unlicensed users who can access the frequency band on a non-interference basis, is designed for small-scale wireless networks and IoT devices.

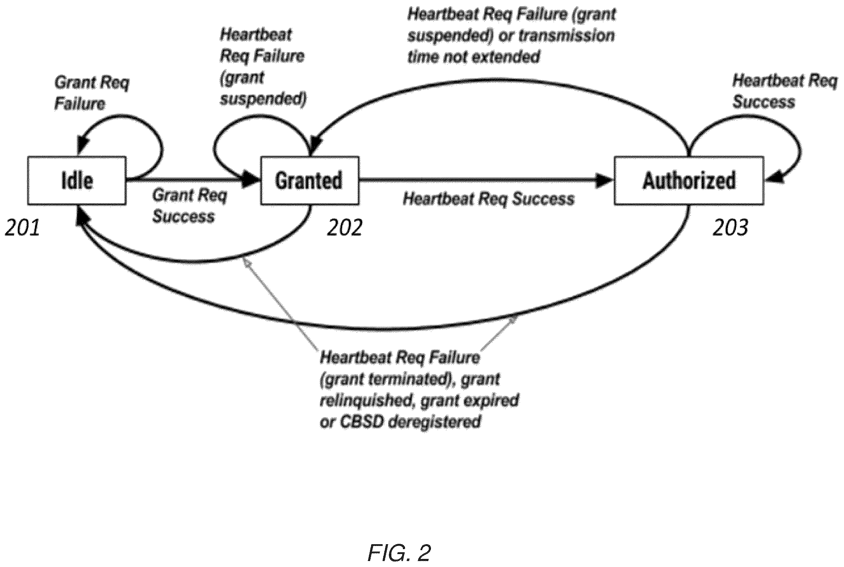

FIG. 2 is a schematic diagram illustrating the CBRS Grant State Machine. Each Grant, represented by a GrantId, has their own state machine. The Grant state machine is in the Idle state 201 if a Grant has not been approved by the SAS. A CBSD can send the SAS a GrantRequest object, and if a Grant request is approved by the SAS, the SAS will send a GrantResponse object. Upon reception of a successful GrantResponse object from the SAS, the Grant transitions to Granted state 202. In the Granted state 202, a GrantId is assigned, operational parameters are defined, and a channel is allocated. A CBSD with a Grant that is ready to commence radio frequency (RF) transmission commences Heartbeat procedure associated with the Grant by sending a HeartbeatRequest object. If the SAS approves a Heartbeat Request, the SAS sends a HeartBeatResponse object authorizing the transmission. Upon reception of a successful HeartbeatResponse object from the SAS, the Grant transitions to the Authorized state 203. In the Authorized state 203, the CBSD is permitted to commence RF transmission and operate in the CBRS band using the operational parameters specific to that Grant. If a CBSD receives multiple Grants, individual state machines are kept for each Grant, and individual heartbeat requests need to be sent for each Grant, which can be aggregated in a single transmission to the SAS. The Grant transitions from the Authorized state 2003 back to the Granted state 2002 if the Grant is suspended by the SAS or the transmission right, as defined by the transmitExpireTime parameter in the HeartbeatResponse object, has expired. The Grant transitions to the Idle state 2001 if: i) the Grant is terminated by the SAS or relinquished by the CBSD; ii) the Grant has expired as defined in the grantExpireTime parameter; or iii) the SAS to CBSD connectivity is lost.

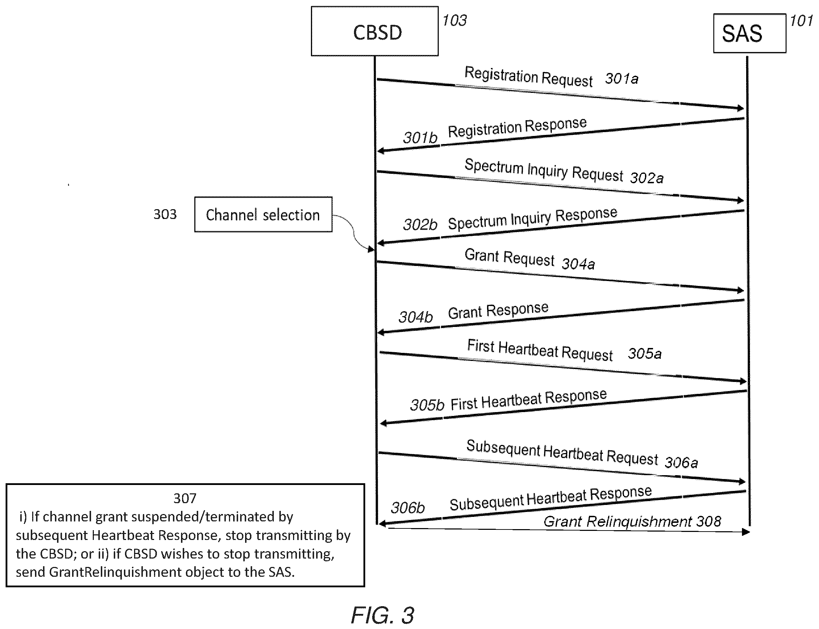

FIG. 3 is a signal-flow diagram illustrating an example CBRS procedure. When the CBSD 103 (e.g., O-RU) starts-up, it will register with the SAS 101 by sending a RegistrationRequest object, as shown by 301a. The RegistrationRequest object includes operational parameters of the CBSD (e.g., O-RU), including identity of the CBSD and its physical location (latitude, longitude, altitude). The SAS 101 will accept the registration by sending a RegistrationResponse object, as shown by 301b. In order to be able to find out which channels are available in the area where the CBSD 103wants to transmit, the CBSD 103 performs the Spectrum Inquiry procedure, as shown by 302a and 302b. The CBSD 103 sends the SpectrumInquiry object to the SAS 101 (as shown by 302a) with a list of channels of interest. The SpectrumInquiryResponse sent by the SAS 101 (as shown by 302b) includes all available channels in the transmission area, which transmission area is defined based on the physical location of the CBSD.

Continuing with the signal-flow diagram of FIG. 3, based on the available channels, the CBSD now chooses one or more channels (as shown by 303) and requests a Grant via the Grant Request procedure, which involves sending a Grant Request 304a and receiving a Grant Response 304b. If the request is Granted by the SAS 101, after the reception of the GrantResponse 304b, the CBSD 103 starts a first Heartbeat procedure, which involves sending a first Heartbeat Request 305a to the SAS 101 and receiving a first Heartbeat Response 305b from the SAS 101. The GrantResponse 304b will also include the maximum power that the CBSD (e.g., O-RU) can transmit, which limits possible interference in the CBRS band. After the first successful HeartbeatResponse 305b is received from the SAS 101, the CBSD 103 (e.g., O-RU) can start transmitting in the channel associated with that grant. The CBSD 103 keeps sending HeartbeatRequest object periodically to the SAS 101, as exemplified by a subsequent Heartbeat Request 306a (to which the SAS 101 sends a subsequent Heartbeat Response 306b), as a form of "keep alive" mechanism. The procedure continues and the CBSD 103 (e.g., O-RU) can continue transmitting in the channel until the SAS 101 suspends or terminates the grant via a HeartbeatResponse object asking for such suspension or termination, as shown at 307. Additionally, if the CBSD decides to stop transmitting, the CBSD will send a GrantRelinquishment object 308 to the SAS 101 to notify the SAS that it no longer needs the channel associated with that grant.

The Domain Proxy (DP) is the entity that can handle the CBRS procedures with the SAS on behalf of the CBSDs. The basic functionality of the DP is to be a "proxy" for the CBSD. Part of this "proxy" functionality includes the aggregation of information coming from/to several CBSDs to/from the SAS. This reduces the number of messages and the number of connections that need to be established between the SAS and the CBSDs. Additionally, this helps by offloading the CBRS functionality from the CBSD (e.g., O-RU) to the DP. As an example, the O-RU does not need to keep sending periodic HeartbeatRequest objects to the SAS, since the DP will handle that procedure on behalf of the O-RU. Accordingly, the CBSD 103 shown in FIG. 3 should be interpreted as also encompassing a DP for the information exchange with the SAS.

Conventional RANs were implemented as an integrated unit where the entire RAN was processed. Conventional RANs implement the protocol stack (e.g., Physical Layer (PHY), Media Access Control (MAC), Radio Link Control (RLC), and Packet Data Convergence Control (PDCP) layers) at the base station (also referred to as the evolved node B (eNodeB or eNB) for 4G LTE, or next generation node B (gNodeB or gNB) for 5G NR). In addition, conventional RANs use application specific hardware for processing, which make the conventional RANs difficult to upgrade and evolve. As future networks evolve to have massive densification of networks to support increased capacity requirements, there is a growing need to reduce the capital costs (CAPEX) and operating costs (OPEX) of RAN deployment and make the solution scalable and easy to upgrade.

Cloud-based Radio Access Networks (CRANs) are networks in which a significant portion of the RAN layer processing is performed at a baseband unit (BBU), located in the cloud on commercial off-the-shelf servers, while the radio frequency (RF) and real-time critical functions can be processed in the remote radio unit (RRU), also referred to as the radio unit (RU). The BBU can be split into two parts: centralized unit (CU) and distributed unit (DU). CUs are usually located in the cloud on commercial off the shelf servers, while DUs can be distributed. The BBU may also be virtualized, in which case it is also known as vBBU. Radio Frequency (RF) interface and real-time critical functions can be processed in the RU.

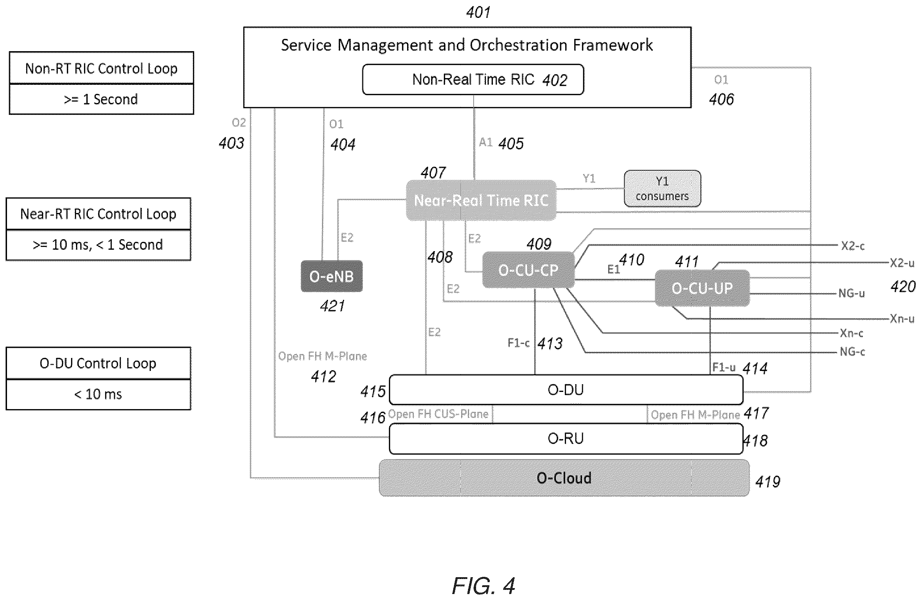

The O-RAN architecture is a Cloud-based architecture specified by the O-RAN Alliance. The logical architecture of the O-RAN system is specified in [O-RAN.WG1.O-RAN-Architecture-Description-v010.00] and depicted in FIG. 4. The components of the architecture include the Service Management and Orchestrator (SMO) Framework 401, the Non-Real Time (Non-RT) Radio Intelligent Controller (RIC) 402, the Near-Real Time (Near-RT) Radio Intelligent Controller (RIC) 407, the O-RAN Centralized Unit Control Plane (O-CU-CP) 409, O-RAN Centralized Unit User Plane (O-CU-UP) 411, the O-RAN Distributed Unit (O-DU) 415, and the O-RAN Radio Unit (O-RU) 418.

The Service Management and Orchestrator (SMO) Framework 401 is responsible for the management of the O-RAN components (O-CU-CP, O-CU-UP, O-DU and O-RU for 5G, and O-eNB for 4G). The SMO uses the O2 interface 403 to connected with the O-Cloud 419. The management interface between the SMO and the O-RAN components is the O1 interface 404 to O-eNB 421 and A1 interface 405 (via Near-RT RIC 407) to 5G components. The RIC contains Radio Resource Management (RRM) functions that help control and optimize the components and the utilization of radio resources. The RIC can be divided into Non-Real Time RIC 402 and Near-Real Time RIC 407.

The Non-RT RIC 402 is a functionality internal to the SMO 401. Its primary goal is to support intelligent RAN optimization. It provides policy-based guidance, Machine Learning (ML) model management, and enrichment information to the Near-RT RIC function, supporting Radio Resource Management (RRM) optimizations of the Near-RT RIC. The Non-RT RIC 402 can also perform intelligent RRM functions in non-real-time fashion (i.e., Non-RT RIC control loop is greater than 1 second), and the Non-RT RIC 402 communicates with the Near-RT RIC 407 via the A1 interface 405.

The Near-RT RIC 407 is a logical function that enables near real-time control and optimization of radio components and resources via fine grained data collection and actions over the E2 interface. The Near-RT RIC 407 controls loops that operate in the order of 10 milliseconds (10ms) to 1 second (1s). The Near-RT RIC 407 hosts one or more applications that use E2 interface 408 to collect near real-time information (e.g., on a UE-basis or on a cell-basis) and provides value-added services. The Near-RT RIC's control over the radio components is steered via policies and enrichment data provided via A1 interface 405 from the Non-RT RIC 402.

The data between the O-CU-CP 409 and O-CU-UP 411 is carried over the 3GPP interface E1 410. The data between the O-CU-CP/O-CU-UP and O-DU 415 is carried over the 3GPP interface F1-c and F1-u interfaces 413 and 414, respectively. The O-DU 415 is responsible for scheduling the data transmission over the air, and the O-DU scheduler runs a control loop in the order of milliseconds (< 10ms). The data between O-DU 415 and O-RU 418 is sent over the open fronthaul Control-User-Synchronization-Plane (Open FH CUS-Plane) 416 and open fronthaul Management-Plane (Open FH M-Plane) interface 417. The data between SMO 401 and O-RU 418 is sent over Open FH M-Plane interface 412. Other 3GPP interfaces also shown in FIG. 3 include: X2-c, X2-u, Xn-c, Xn-u, NG-u and NG-c (all of which are generally referenced by 420). X2-c, X2-u, Xn-c, and Xn-u carry data between O-CU-CP/O-CU-UP and other O-CU-CP/O-CU-UP. NG-c and NG-u carry data between O-CU-CP/O-CU-UP and the 5G Core.

The Near-RT RIC 407's decisions are based on its internal functions or applications, the configuration received over the O1 interface and the temporary policies received over the A1 interface from the Non-RT RIC 402. In order to support the policy enforcement in the Near-RT RIC 407, the Non-RT RIC 402 can also provide enrichment information over the A1 interface 405.

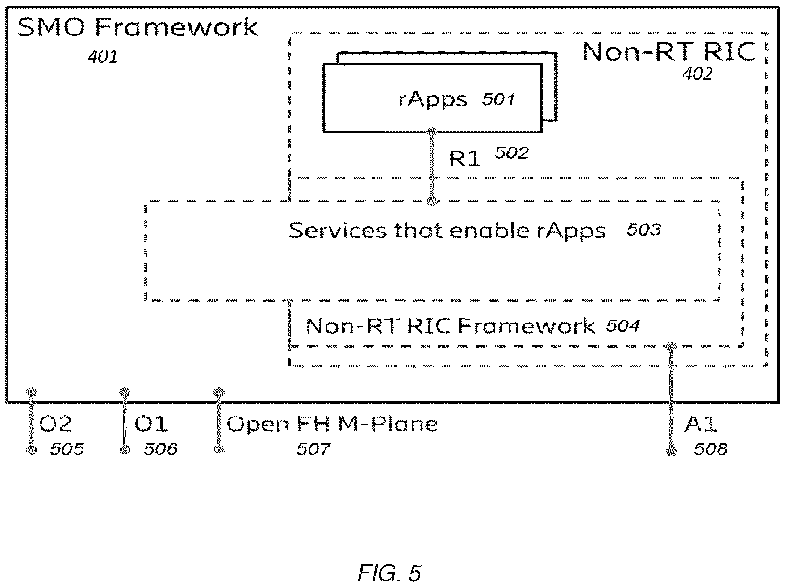

FIG. 5 depicts the SMO Framework 401 and Non-RT RIC Framework 503 (as part of Non-RT RIC 402). The Non-RT RIC 402 has an interface A1508 to the Near-RT RIC (which is not explicitly shown in FIG. 5). Being part of the SMO Framework 401, the Non-RT RIC 402 can also indirectly utilize the O1 interface 506, O2 interface 505 and Open FH M-Plane interface 507.

Encompassed within the Non-RT RIC 402 are the Non-RT RIC Framework 504 and the rApps 501. Some of the Non-RT RIC Framework 504 functions and services include: providing policy-based guidance and enrichment information to the Near-RT RIC, data analytics, AI/ML training, inference for RAN optimization, and recommendations for configuration management actions over O1 interface 506. The rApps 501 are modular applications that leverage the functionality exposed by the Non-RT RIC 402 to provide added value services relative to intelligent RAN optimization and operation. The Non-RT RIC framework 504 functions provide services 503 (designated "service that enable rApps") to the rApps 501 via the R1 interface 502. The R1 interface 502 is an Open API interface and provides a level of abstraction such that an rApp that is a producer of data ("producer rApp") does not need to know whether there exists one or multiple consumers for that data, or the nature of that consumer. In other words, the "producer rApp" does not need to know whether the consumer of the data is a "consumer rApp" or is an entity external to the Non-RT RIC or SMO. Additionally, the R1 interface 502 provides a functionality such that a "consumer rApp" does not need to know whether the data consumed is the product of a single entity (e.g., a single "producer rApp"), or a combined output of a complex chain of entities (e.g., a chain of rApps each consuming the value-added product of another).

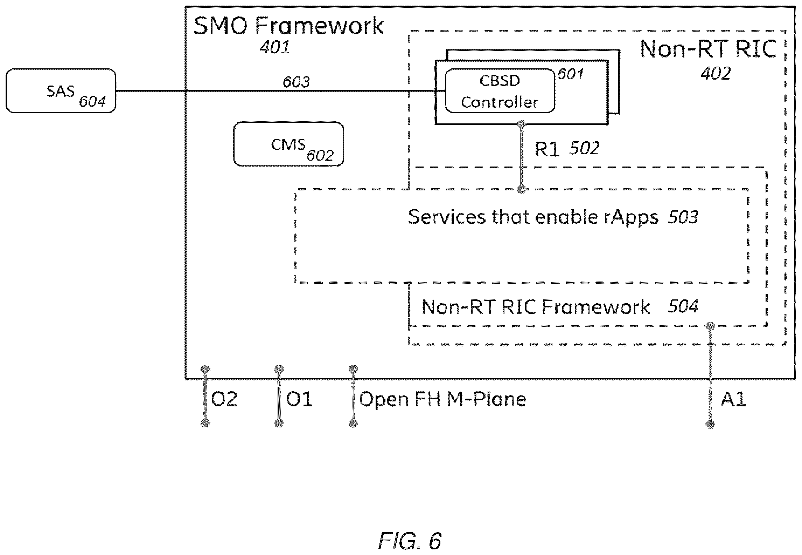

FIG. 6 is a block diagram illustrating an example architecture of CBRS in O-RAN. From the perspective of the SAS 604, a CBSD is a radiation point, so it is mapped to the O-RU. From the O-RAN's perspective, it is not practical to have the O-RU communicate directly to the SAS as the O-RU is designed to be a low-cost component. In FIG. 6, a CBSD Controller 601 implements the domain proxy (DP) functionality, where the DP is a proxy for CBSDs and interfaces (as shown by 603) with the SAS 604. The CBSD Controller 601 can be an rApp in the non-RT RIC 402 and can communicate with the Cloud Management System (CMS) 602 which is a part of the SMO Framework 401 for the configuration of the RAN components. Also shown in FIG. 6 are the Non-RT RIC framework 504 functions which provide services 503 (designated "service that enable rApps").

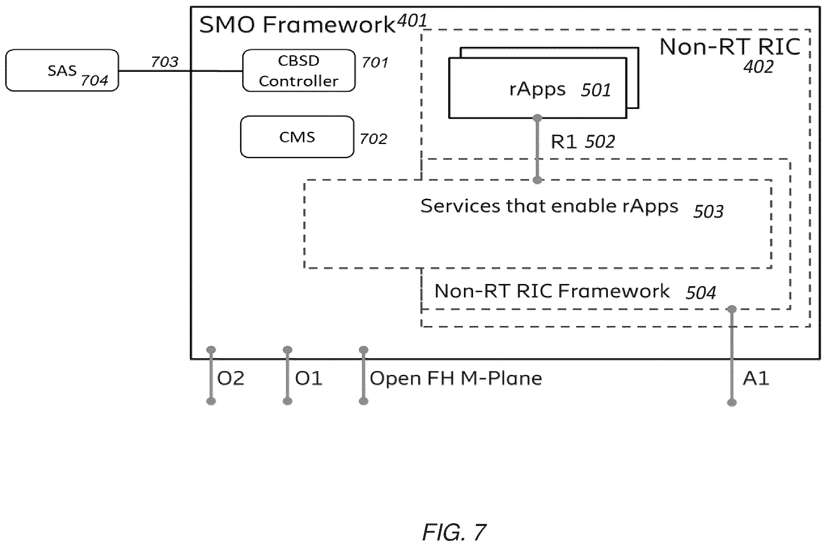

FIG. 7 is a block diagram illustrating another example architecture of CBRS in O-RAN. In this alternative architecture, the CBSD Controller 701 is shown as a part of the SMO Framework 401 and can communicate with the CMS 702 directly. The other components of the architecture shown in FIG. 7 substantially correspond to the components of the architecture shown in FIG. 6, i.e., Non-RT RIC 402; SAS 704 interfacing (as shown by 703) the CBSD Controller 701; rApps 501; R1 interface 502; services that enable rApps 503; and Non-RT RIC framework 504.

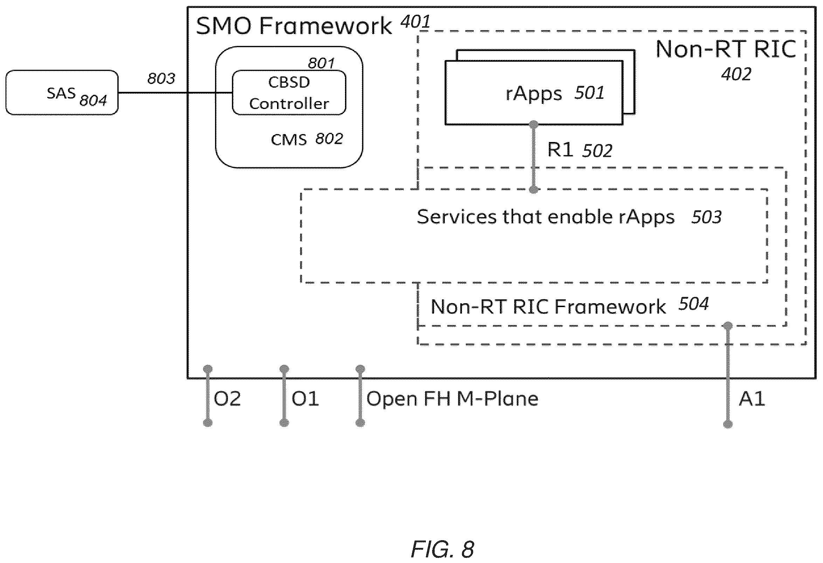

FIG. 8 is a block diagram illustrating yet another example architecture of CBRS in O-RAN. In this alternative architecture, the CBSD Controller 801 is shown as a part of the CMS 802. The other components of the architecture shown in FIG. 8 substantially correspond to the components of the architectures shown in FIGS. 6 and 7, i.e., SMO Framework 401; Non-RT RIC 402; SAS 804 interfacing (as shown by 803) the CBSD Controller 801; rApps 501; R1 interface 502; services that enable rApps 503; and Non-RT RIC framework 504.

In an example scenario, there can be many CBRS Users (i.e., RAN operators) operating in the same area, each CBRS User with multiple CBSD. The CBSDs of different CBRS Users can cause interference to each other because they can request the same frequency grant from the SAS. Currently, SAS administrators do not reject any grant request as long as it does not interfere with Incumbent or PAL Users. Given this operating framework, it is challenging to coordinate among GAA CBRS Users (RAN operators) to ensure that their CBSDs do not cause interference to other operators.

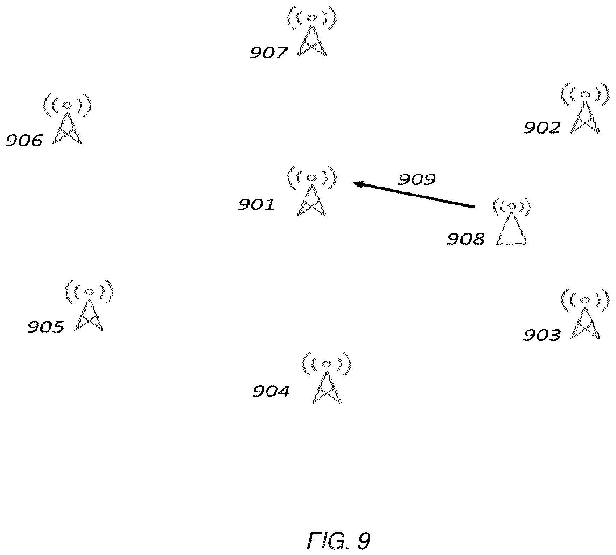

FIG. 9 is a diagram illustrating CBSDs near each other causing mutual interference. In FIG. 9, CBRS User 1 owns CBSDs (e.g., O-RUs) 901 to 907, while CBRS User 2 owns CBSD 908 which is near CBSD 901, thereby causing interference (as shown by 909) to CBSD 901 due to the use of the same operating frequency. Had one of the CBRS Users 1 and 2 known that there is high interference involving the same frequency, the user could have requested a different frequency grant from the SAS. OnGo Alliance (OnGoA) has created TS-2003 Collaborative GAA Coexistence Specification ("Coexistence Specification") as the framework for the GAA Users to coexist, minimizing interference with each other. One of the steps in the framework of the Coexistence Specification is for the GAA CBRS Users to report high interference, but the Coexistence Specification does not address how the CBRS Users are to measure the interference.

This challenge is also present in typical 4G LTE and 5G NR wireless networks. The wireless operators typically own their operating frequency auctioned from the government to have an exclusive right to operate. However, there could be an external interference from other unknown sources, e.g., faulty devices nearby or unintended out-of-band emissions from nearby frequencies owned by other operators. For example, a radio source near the CBSD 901 (O-RU) in FIG. 9 can be the external interferer causing harmful interference to CBSD 901 (O-RU) and possibly to other surrounding O-RUs. Similarly, higher level of interference could be experienced in typical 4G LTE and 5G NR wireless networks by an operator's own neighboring cell sites during the early stages of deployment or network planning when working through optimal transmission settings, e.g., beamwidths, transmit powers, antenna tilts, etc. In all such cases, it is very useful for the operator to determine the level of interference each site is experiencing from the neighboring sites.

A conventional way to measure the interference is to measure uplink (UL) Received Signal Strength Indicator (RSSI) at the CBSD/O-RU. This can be done only during low traffic at late night or maintenance hours so that the base station (BS) does not measure the power from its own UE's or from its own O-RU. This UL RSSI measurement is sometimes sufficient for non-CBRS networks if the interference is observed during the daytime. However, shutting down all CBSDs in the daytime is not desirable as this will interrupt the service in a wide area. It is more practical to shut down only CBSDs which are the neighbors of the measuring CBSD. In addition, shutting down the service for a long duration is also not preferred, and a shorter duration is needed.

Therefore, there is a need for an improved method to enable a CBRS user (also referred to as an operator) to measure interference from other CBRS operators or from external interfering sources.

### SUMMARY

Accordingly, what is desired is an improved system and method to enable a CBRS user (also referred to as an operator) to measure interference from other CBRS operators or from external interfering sources.

An example embodiment of a system for measuring interference from other CBRS operators or from external interfering sources includes: a radio measurement controller (RMC); and an interference processor at an O-DU serving the center CBSD positioned among neighboring CBSDs, which O-DU serving the center CBSD includes a MAC Scheduler, and the O-DUs serving the neighboring CBSDs include corresponding MAC Schedulers.

According to an example embodiment of a system and a method for measuring interference from other CBRS operators or from external interfering sources, the radio measurement controller (RMC) is configured to perform the following functionalities:
a) select the center CBSD to measure the interference from other CBRS operators or from external interfering sources;
b) select a group of neighboring CBSDs to stop the service to their UEs, referred to as "blanking" in the present disclosure;
c) select frequency ranges and blanking time in single or multiple OFDM symbols in single or multiple downlink, uplink or Special/Flexible subframe/slots in the Time Division Duplex (TDD) DL/UL configuration, which OFDM symbols are referred to as Coordinated Blank OFDM Symbols (CBOS);
d) send interference measurement request to the center CBSD;
e) send blanking request to a group of neighboring CBSDs; and
f) receive processed interference report from the center CBSD.

According to an example system and method of the present disclosure, in LTE, the CBOS can be configured in any downlink subframe, any uplink subframe, downlink symbols in the special subframe or uplink symbols in the special subframe.

According to an example system and method of the present disclosure, in NR, the CBOS can be configured in: any downlink slot; partial symbols in any downlink slot; any uplink slot; partial symbols in any uplink slot; partial or all downlink symbols in the flexible slot; or partial or all uplink symbols in the flexible slot.

According to an example system and method of the present disclosure, the Radio Measurement Controller can be located in: non-RT RIC as an rApp; as a part of the CBSD Controller, which is an rApp; in SMO; or as a part of the CMS, which is in SMO.

According to an example system and method of the present disclosure, the following are provided: the MAC Scheduler at the O-DU serving the center CBSD processes the measurement request from the Radio Measurement controller and schedules measurement at the corresponding O-RU; the Interference Processor at the O-DU serving the center CBSD processes the measurement from the Radio Measurement controller and reports it back to the Radio Measurement Controller; the MAC Schedulers at the O-DU(s) serving the neighboring CBSDs process the muting request from the Radio Measurement controller and schedules muting at the corresponding O-RUs; and an Interference Locator module (e.g., implemented as an rApp in the non-RT RIC) uses the coordinated blanking to locate the physical location of the external interferer by triangulating method, which Interference Locator module requests multiple measurements to the Radio Measurement Controller to perform the coordinated blanking around the suspected physical location of the external interferer.

According to an example system and method of the present disclosure, the trigger for the Radio Measurement Controller to start the interference measurement procedure includes at least one of the following conditions:
Time based - trigger at a specific time of the day, week, month, or years;
Periodicity - trigger at a certain periodicity;
Event based - trigger when a specific event occurs, e.g.:
   i) Average DL or UL Block Error Rate (BLER) is higher than DL BLER threshold dlBlerTh or UL BLER threshold ulBlerTh, respectively;
   ii) Average DL or UL throughput is lower than DL throughput threshold dlTpTh or UL throughput threshold ulTpTh, respectively;
   iii) Average DL or UL Modulation and Coding Scheme (MCS) is lower than DL MCS threshold dlMcsTh or UL MCS threshold ulMcsTh, respectively;
   iv) Average DL or UL Channel Quality Indicator (CQI) is lower than DL CQI threshold dlCqiTh or UL CQI threshold ulCqiTh, respectively;
   v) Average DL or UL Rank Indicator (RI) is lower than DL RI threshold dlRiTh or UL RI threshold ulRiTh, respectively;
   vi) Manual trigger by the operator;

For this application, the following terms and definitions shall apply:
The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The above-described and other features and advantages of the present disclosure will be appreciated and understood by those skilled in the art from the following detailed description, drawings, and appended claims.

### BRIEF DESCRIPTION OF THE DRAWINGS

FIG. 1 is a block diagram illustrating the CBRS architecture.
FIG. 2 is a schematic diagram illustrating the CBRS Grant State Machine.
FIG. 3 is a signal-flow diagram illustrating an example CBRS procedure.
FIG. 4 illustrates Open RAN (O-RAN) logical architecture.
FIG. 5 is a block diagram illustrating SMO and Non-RT RIC Framework Services.
FIG. 6 is a block diagram illustrating an example architecture of CBRS in O-RAN.
FIG. 7 is a block diagram illustrating another example architecture of CBRS in O-RAN.
FIG. 8 is a block diagram illustrating yet another example architecture of CBRS in O-RAN.
FIG. 9 is a diagram illustrating CBSDs near each other causing mutual interference.
FIG. 10 is a diagram illustrating the logical functionality of the center cell communicating with its neighbors for coordinating blanking.
FIG. 11 is a diagram illustrating a Radio Measurement Controller managing the coordinated blanking measurement functionality.
FIG. 12 is a block diagram illustrating the Radio Measurement Controller as part of the CBSD Controller, which is an rApp in the non-RT RIC.
FIG. 13 is a block diagram illustrating the Radio Measurement Controller being implemented as an rApp in the non-RT RIC.
FIG. 14 is a block diagram illustrating the Radio Measurement Controller being implemented in SMO framework.
FIG. 15 is a block diagram illustrating the Radio Measurement Controller being implemented as an entity in the CMS.
FIG. 16 is a diagram illustrating an application of the example method to base stations each having multiple sectors.
FIG. 17 is a block diagram illustrating the coordination between the center CBSD and its neighboring CBSDs with respect to the Coordinated Blanking OFDM Symbol (CBOS).
FIG. 18 is a block diagram illustrating the functionalities and the components of the system for interference measurement.
FIG. 19 illustrates example 4G LTE TDD DL/UL configurations.
FIG. 20 illustrates an example 5G NR TDD DL/UL configuration.
FIG. 21 illustrates an example of Coordinated Blanking OFDM Symbols (CBOS) in 4G LTE.
FIG. 22 illustrates an example of CBOS using different OFDM symbols in the 5G NR TDD DL/UL slot.
FIG. 23 illustrates an example of finding the location of the interferer using CBOS and triangulating.
FIG. 24 is a block diagram illustrating the Interference Locator implemented as an rApp in the non-RT RIC.

### DETAILED DESCRIPTION

The present disclosure provides systems and methods to measure interference from CBSD(s) belonging to other operators and other external interfering sources by having the center CBSD (cell) select a group of neighboring CBSDs (cells) to coordinate in the interference measurement.

An example embodiment of a system for measuring interference from other CBRS operators or from external interfering sources includes: a radio measurement controller (RMC); and an interference processor at an O-DU serving the center CBSD positioned among neighboring CBSDs, which O-DU serving the center CBSD includes a MAC Scheduler, and the O-DUs serving the neighboring CBSDs include corresponding MAC Schedulers.

According to an example embodiment of a system and a method for measuring interference from other CBRS operators or from external interfering sources, the radio measurement controller (RMC) is configured to perform the following functionalities:
g) select the center CBSD to measure the interference from other CBRS operators or from external interfering sources;
h) select a group of neighboring CBSDs to stop the service to their UEs, referred to as "blanking" in the present disclosure;
i) select frequency ranges and blanking time in single or multiple OFDM symbols in single or multiple downlink, uplink or Special/Flexible subframe/slots in the Time Division Duplex (TDD) DL/UL configuration, which OFDM symbols are referred to as Coordinated Blank OFDM Symbols (CBOS);
j) send interference measurement request to the center CBSD;
k) send blanking request to a group of neighboring CBSDs; and
1) receive processed interference report from the center CBSD.

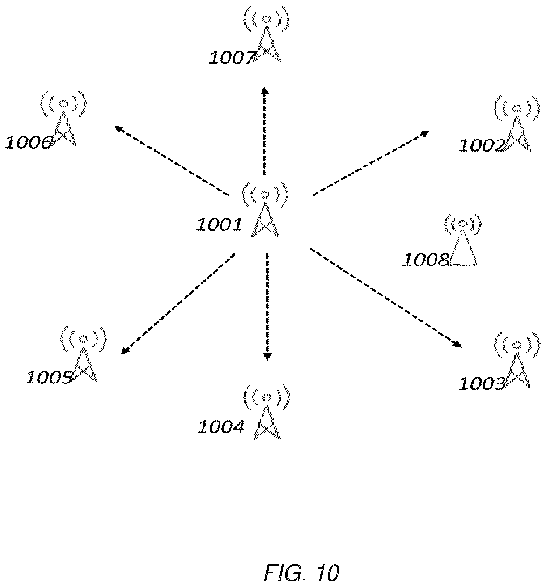

FIG. 10 is a diagram illustrating the logical functionality of the center cell communicating with its neighbors for coordinating blanking. In FIG. 10, CBSDs 1001 to 1007 are shown, as well as an external radio source 1008. The center CBSD 1001 is the CBSD of interest where the CBSD User (operator) would like to measure the interference, and adjacent neighboring cells for the center CBSD (cell) 1001 would be cells (CBSDs) 1002 to 1007, transmissions from which neighboring CBSDs (cells) can be strong enough to be present at the center CBSD (cell). Therefore, by blanking or muting the neighboring CBSDs' transmission, the center CBSD can be certain that the interference does not come from its own neighboring CBSDs, but from the external radio source. The center CBSD can also expand its list of the neighboring CBSDs to cover two CBSDs or more away (up to the entire market), e.g., this can be done in the small-cell scenario where the site-to-site distance is small. After measuring the interference for the center CBSD (cell) 1001, another CBSD, e.g., CBSD 1002, can be the center CBSD (or cell) for interference measurement, in which case adjacent neighboring cells for the center CBSD (cell) 1002 would be cells (CBSDs) 1001, 1003, 1007 and other cells on the right (not shown) of CBSD (cell) 1002.

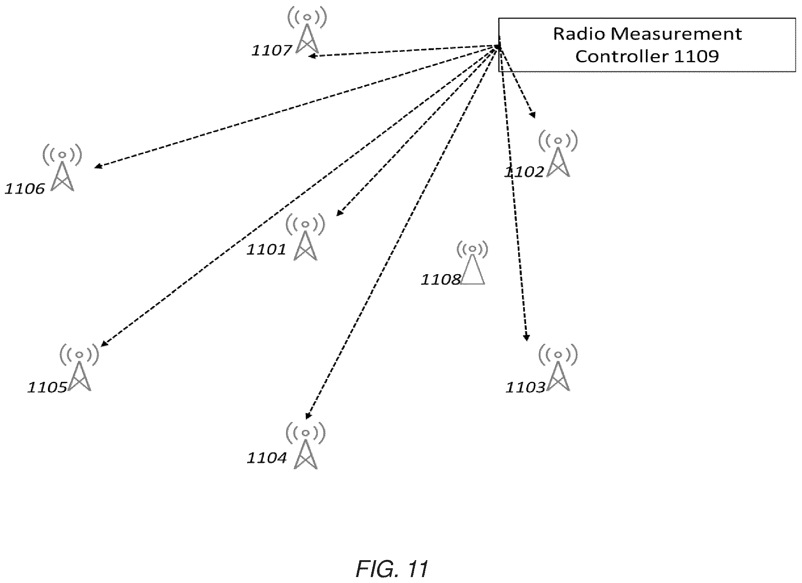

FIG. 11 is a diagram illustrating a Radio Measurement Controller (RMC) 1109 managing the coordinated blanking measurement functionality. In FIG. 11, the Radio Measurement Controller 1109 is the centralized entity responsible for managing the coordinated blanking measurement functionality, which FIG. 11 also shows CBSDs 1101 to 1107 and an external radio source 1108. RMC 1109 sends a measurement request to the center cell (e.g., CBSD 1101) and sends a blanking request to the selected neighboring cells (e.g., CBSDs 1102 to 1107) and compile the report from the center cell.

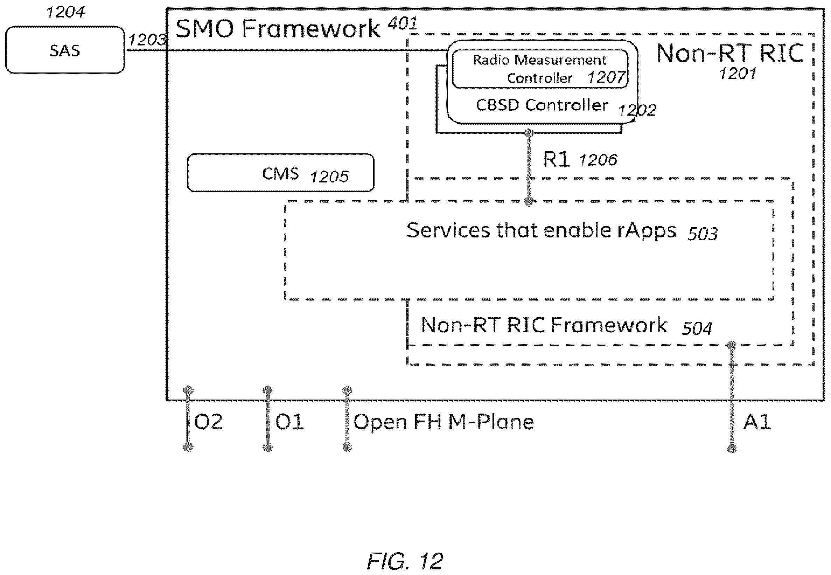

FIG. 12 is a block diagram illustrating an example embodiment in which the Radio Measurement Controller (RMC) 1207 is implemented as part of the CBSD Controller 1202, which is in turn an rApp in the non-RT RIC 1201. Also shown in FIG. 12 are: SMO Framework 401; SAS 1204; CMS 1205; interface 1203 linking SAS 1204 and CBSD Controller 1202; R1 interface 1206; Non-RT RIC Framework 504; and services that enable rApps 503.

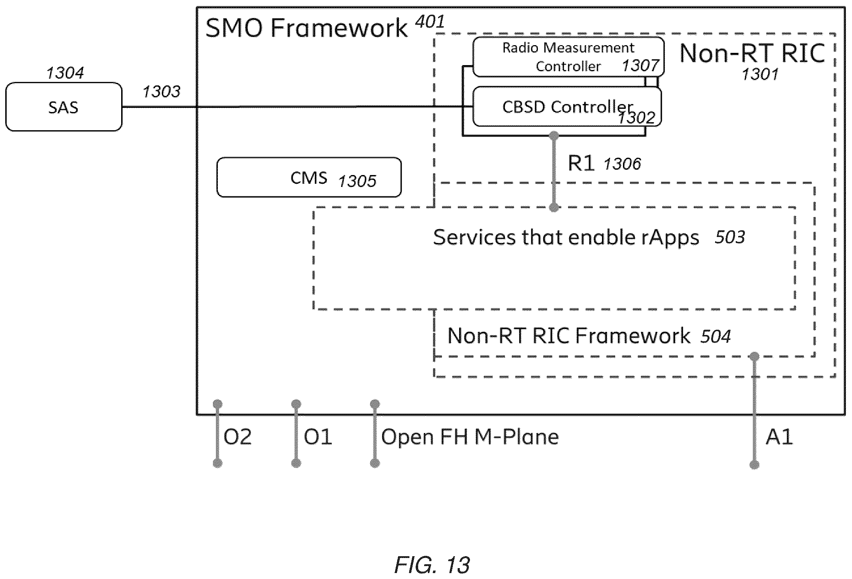

FIG. 13 is a block diagram illustrating an example embodiment in which the Radio Measurement Controller (RMC) 1307 is implemented as an rApp in the non-RT RIC 1301. The RMC 1307 can communicate with the CBSD Controller 1302, e.g., via R1 interface 1306. Also shown in FIG. 13 are: SMO Framework 401; SAS 1304; CMS 1305; interface 1303 linking SAS 1304 and CBSD Controller 1302; Non-RT RIC Framework 504; and services that enable rApps 503.

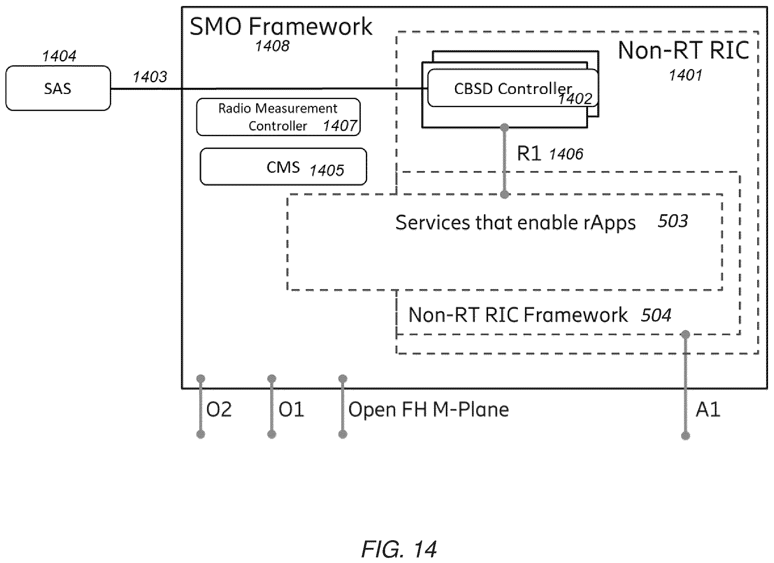

FIG. 14 is a block diagram illustrating an example embodiment in which the Radio Measurement Controller (RMC) 1407 is implemented in SMO framework 1408. Also shown in FIG. 14 are: SMO Framework 1408; SAS 1404; CMS 1405; CBSD Controller 1402; R1 interface 1406; interface 1403 linking SAS 1404 and CBSD Controller 1402; Non-RT RIC 1401; Non-RT RIC Framework 504; and services that enable rApps 503.

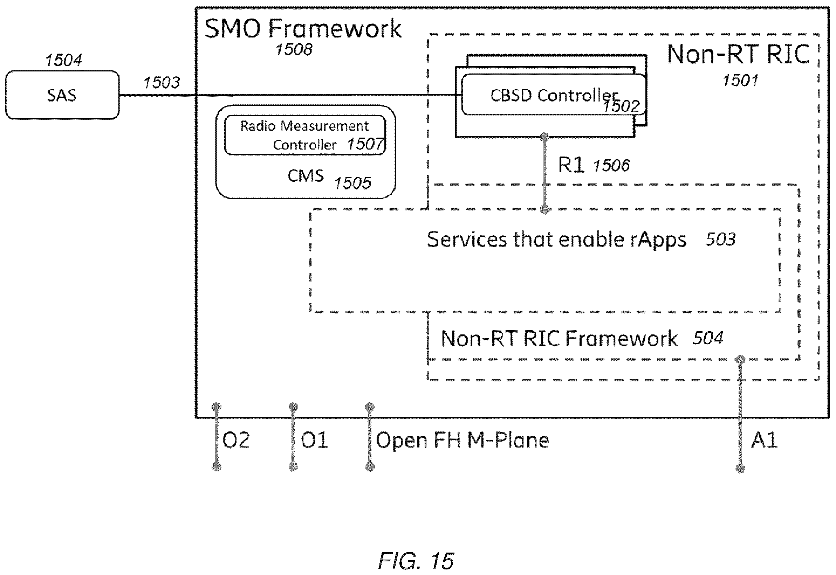

FIG. 15 is a block diagram illustrating an example embodiment in which the Radio Measurement Controller (RMC) 1507 is implemented as an entity in the CMS 1505. The RMC 1507 can communicate with the CBSD Controller 1502, e.g., via R1 interface 1506. Also shown in FIG. 15 are: SMO Framework 1508; SAS 1504; interface 1503 linking SAS 1504 and CBSD Controller 1502; interface 1503 linking SAS 1504 and CBSD Controller 1502; Non-RT RIC 1501; Non-RT RIC Framework 504; and services that enable rApps 503.

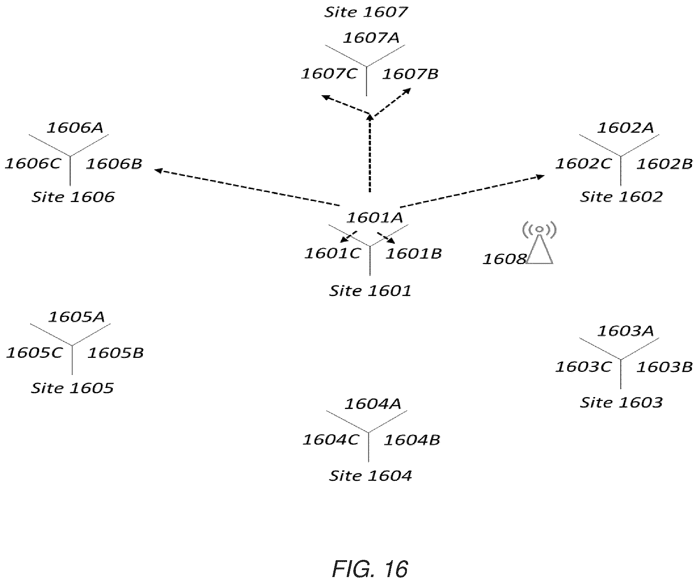

The example method according to the present disclosure is applicable to base stations or sites with sectorized antennas (i.e., multiple antennas), each with a CBSD/O-RU. FIG. 16 is a diagram illustrating an application of the example method to base stations each having multiple sectors (e.g., 3 sectors), with each sector having a respective CBSD (e.g., O-RU). FIG. 16 shows seven cell sites, 1601 to 1607, with each cell site having three sectors associated with corresponding three CBSDs (e.g., cell site 1601 has sectors (CBSDs) 1601A to 1601C, cell site 1602 has sectors (CBSDs) 1602A to 1602C, etc.). Also shown in FIG. 16 is an external radio source 1608. Since CBSD 1601A's antenna points north, CBSD 1601A can request to blank/mute its neighboring cells that have their antennas pointed to CBSD 1601A, that is, CBSD 1602C, 1606B, 1607B and 1607C. It should also blank/mute other CBSDs at the same cell site (1601), i.e., CBSDS 1601B and 1601C, as the antennas' front-to-back attenuation might not be high enough to reduce the signals from those cells (CBSDS 1601B and 1601C). If needed, CBSD 1601A can also request other cells to blank as well.

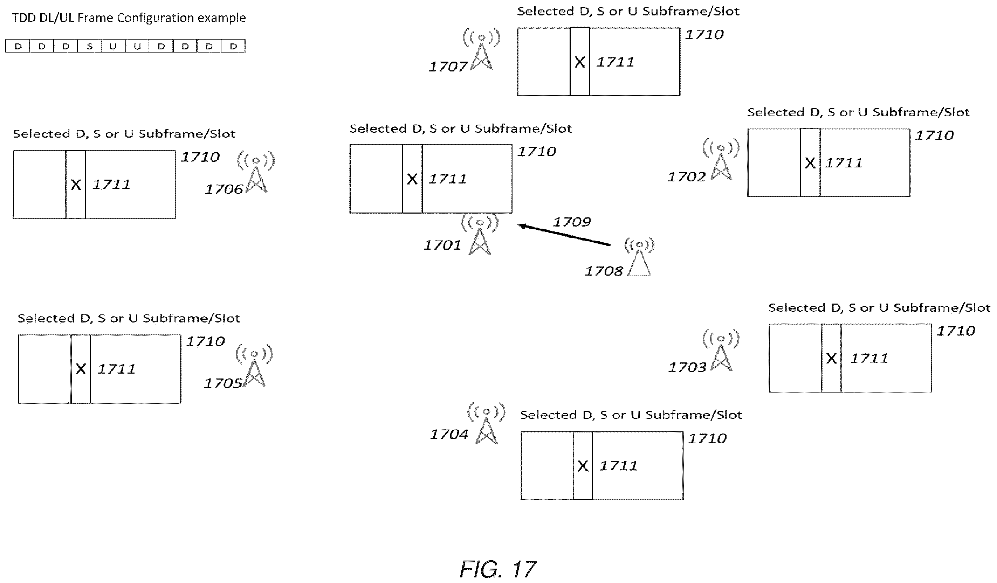

FIG. 17 is a block diagram illustrating the coordination between the center CBSD 1701 and its neighboring CBSDs 1702 to 1707 (of the same network operator) with respect to the Coordinated Blanking OFDM Symbol (CBOS). Time division duplex (TDD) DL/UL frame configuration example is shown on the upper left portion of FIG. 17, which example configuration is: Downlink subframe (or slot) D; D; D; Special (or flexible) subframe (or slot) S; Uplink subframe (slot) U; U; D; D; D; D. Coordinated Blanking OFDM Symbols (CBOS) are a group of OFDM symbols in D, S or U subframe (or slot) in the LTE or NR TDD DL/UL configuration in which the center cell (e.g., CBSD 1701) sends a request to its selected group of neighboring cells to stop DL transmission or stop UL scheduling while the center cell is measuring the interference. As shown in FIG. 17, in the TDD DL/UL frame 1710 for each one of CBSDs 1701 to 1707, the CBOS 1711 (marked with "X") in a selected subframe (or slot) is "blanked" (or muted), thereby enabling the center CBSD 1701 to measure the interference 1709 from an interferer 1708 (e.g., an external radio source). The center CBSD 1701 measures the interference in this CBOS 1711 by disabling the associated Radio Unit (RU)'s Power Amplifier (PA) and enabling the Low Noise Amplifier (LNA) to perform the measurement. Disabling the PA before enabling the LNA is necessary to prevent the PA from creating self-interference to the LNA's sensitive receiver.

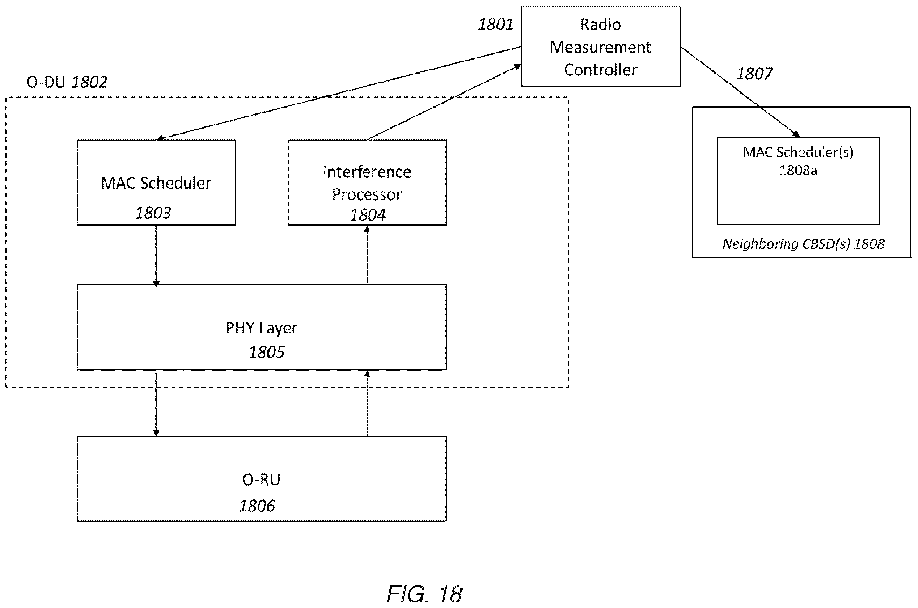

FIG. 18 is a block diagram illustrating the functionalities and the components of the system for interference measurement. The center CBSD is represented by O-RU 1806, and the O-DU 1802 serves (i.e., is linked to) the O-RU 1806. The Radio Measurement Controller (RMC) 1801 coordinates the blanking or muting with neighboring CBSD(s) 1808 by instructing the MAC Scheduler(s) 1808a of the neighboring CBSD(s) 1808 (references numeral 1808 is intended to collectively reference multiple CBSDs, and reference numeral 1808a is intended to collectively reference multiple MAC Schedulers). The RMC 1801 requests the MAC Scheduler 1803 associated with the center CBSD (i.e., O-RU 1806) to schedule the measurement at O-RU 1806. When the O-RU 1806 has measured the interference, the O-RU 1806 sends the interference data back to the PHY layer 1805, which in turn forwards the data to the Interference Processor 1804 for interference processing.

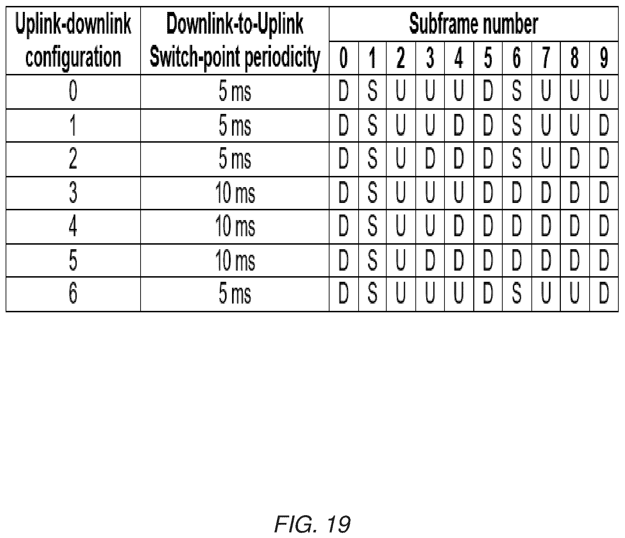

FIG. 19 illustrates example 4G LTE TDD DL/UL configurations of a frame comprising 10 subframes, as per 3GPP TS38.211 Table 4.2-2. Each subframe comprises 14 orthogonal frequency-division multiplexing (OFDM) symbols. In Downlink D subframes and Uplink U subframes, all symbols are used for DL and UL transmission, respectively. The special S subframe comprises a number of Downlink symbols, followed by a number of symbols of Guard Period for transition, followed by Uplink symbols (as per 3GPP TS38.211 Table 4.2-1).

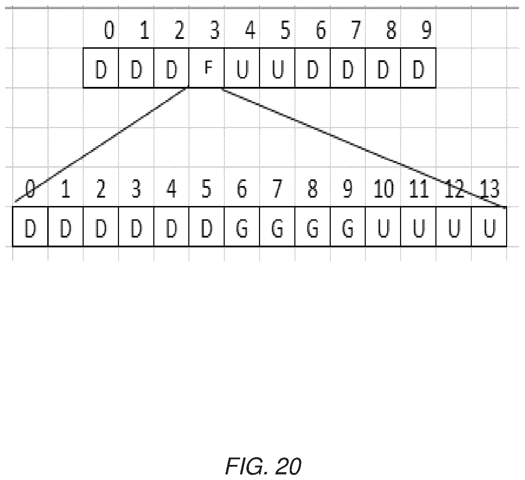

FIG. 20 illustrates an example 5G NR TDD DL/UL configuration. In 5G NR, the TDD UL/DL configuration is more flexible, i.e., the network operator can configure any number of Downlink D slots, Uplink U slots, and Flexible F slots. F slot is similar to S in LTE, but a number of D, U and Guard Period (G) symbols can also be configurable in an F slot. A standard slot has 14 OFDM symbols. Mini slots can contain 2, 4, or 7 OFDM symbols. A mini slot can start at any symbol, i.e., not tied to the start of the frame structure.

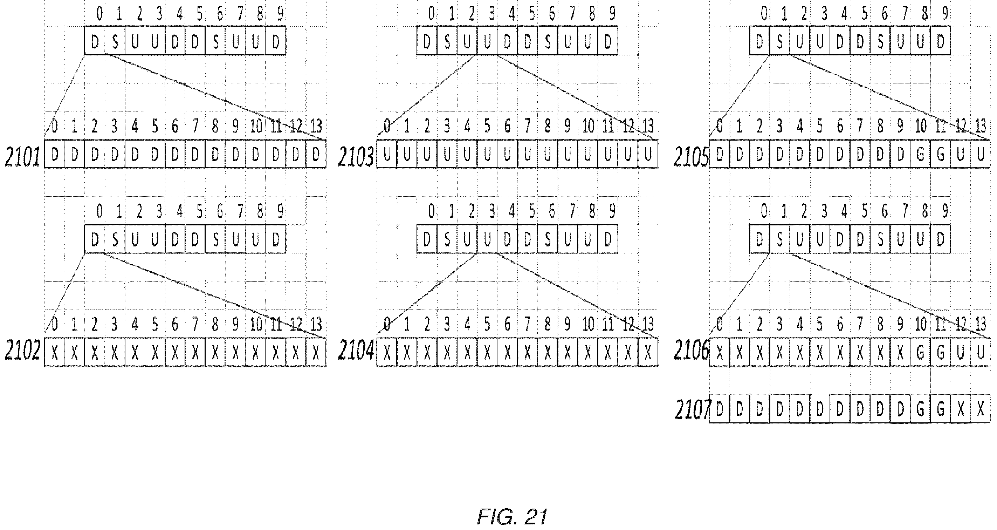

FIG. 21 illustrates an example of Coordinated Blanking OFDM Symbols (CBOS) in 4G LTE. More specifically, FIG. 21 shows the LTE TDD UL/DL configuration 1 with Special S subframe configuration 7. 2101 references the 14 OFDM symbols of the first subframe, D. CBOS can be configured to blank the entire first D subframe (as referenced by 2102) in a selected system frame. 2103 references the fourth subframe, U. CBOS can be configured to blank the entire fourth subframe U (as referenced by 2104). 2105 references the second subframe, S. In the second subframe, S, CBOS can be configured to blank D symbols (as shown by the blanking pattern referenced by 2106) or U symbols (as shown by the blanking pattern referenced by 2107).

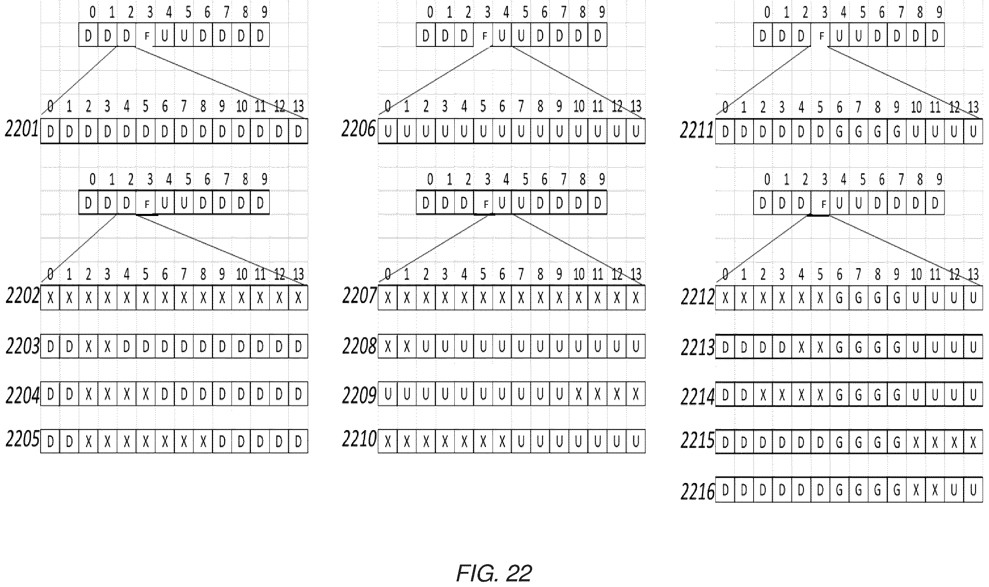

FIG. 22 illustrates an example of CBOS using different OFDM symbols in the 5G NR TDD DL/UL slot. In 5G NR, CBOS can be configured to use the entire Standard Slot or partial slot through Mini Slot configuration. FIG. 22 shows examples of CBOS using both Standard Slot and Mini Slot. CBOS can be configured in D slot 2201 (the third slot in the frame), which D slot can be entirely blanked (as shown by the blanked configuration of 14 symbols referenced by 2202). In addition, Mini Slot configuration can be used to blank 2 symbols (which blanked configuration of 2 symbols is referenced by 2203), 4 symbols (which blanked configuration of 4 symbols is referenced by 2204), or 7 symbols (which blanked configuration of 7 symbols is referenced by 2205) symbols. The start symbol of the Mini Slot can be any symbol. The selected D slot can be any slot in the frame. Similar CBOS configurations can be implemented for U slots. For example, CBOS can be implemented with the selection of the fifth slot in the frame, U slot 2206, with blanking configurations 2207 (all 14 symbols in the U slot 2206 blanked), 2208 (first 2 symbols of the U slot 2206 blanked), 2209 (last 4 symbols of the U slot 2206 blanked), and 2210 (first 7 symbols of the U slot 2206 blanked). For F slot 2211, CBOS can blank all D symbols (which blanked configuration is referenced by 2212), all U symbols (which blanked configuration is referenced by 2215), or only some of the D symbols (which blanked configurations are referenced by 2213 and 2214), or only some of the U symbols (which blanked configuration is referenced by 2216).

According to an example embodiment, when the CBOS contains D symbols, the PA switches off and the LNA is enabled to receive the signal. This is used to detect interference from another operator's CBSD that also transmits in DL (e.g., from the RU) or UL (e.g., from the UEs). The PA is switched off during the Guard Period in the S/F subframe/slot in all cells. The center CBSD does not need to send the request to its neighboring CBSDs. This can also be used to detect the other operator's CBSD that also transmits in DL or UL. However, if the other operator's CBSD is using the same TDD DL/UL configuration, then its Guard Period symbols would coincide with those of the center cell, so the center CBSD cannot detect the signal from the other operator's CBSD.

If the other operator's CBSD is not using the same TDD DL/UL configuration, it may schedule a UL during the Guard Period symbols, for which the center CBSD may not detect any strong signal from the other operator's network. Therefore, in practice, choosing the CBOS in DL, UL and Special (or Flexible) subframe/slot will yield a more comprehensive interference measurement.

The center CBSD and its neighbors can still use the rest of the symbols, if available, to transmit data traffic with reduced code rate. This could also reduce the DL throughput. The impact can be mitigated by choosing the number of symbols in the CBOS and DL subframe/slot in inverse proportion to the average physical resource block (PRB) utilization of the center CBSD and its neighboring CBSDs. According to an example embodiment, the interference measurement can be allowed when the DL and UL average PRB utilization of the center CBSD and its neighboring CBSDs are lower than respective specified thresholds, average DL PRB utilization threshold, avgDlPrbUtilTh, and average UL PRB utilization threshold, avgUlPrbUtilTh.

According to an example system and method of the present disclosure, the trigger for the Radio Measurement Controller to start the interference measurement procedure includes at least one of the following conditions:
Time based - trigger at a specific time of the day, week, month, or years;
Periodicity - trigger at a certain periodicity;
Event based - trigger when a specific event occurs, e.g.:
   vii) Average DL or UL Block Error Rate (BLER) is higher than DL BLER threshold dlBlerTh or UL BLER threshold ulBlerTh, respectively (unexpectedly high BLER can be caused by external interference source);
   viii) Average DL or UL throughput is lower than DL throughput threshold dlTpTh or UL throughput threshold ulTpTh, respectively;
   ix) Average DL or UL Modulation and Coding Scheme (MCS) is lower than DL MCS threshold dlMcsTh or UL MCS threshold ulMcsTh, respectively;
   x) Average DL or UL Channel Quality Indicator (CQI) is lower than DL CQI threshold dlCqiTh or UL CQI threshold ulCqiTh, respectively;
   xi) Average DL or UL Rank Indicator (RI) is lower than DL RI threshold dlRiTh or UL RI threshold ulRiTh, respectively; and
   xii) Manual trigger by the operator;

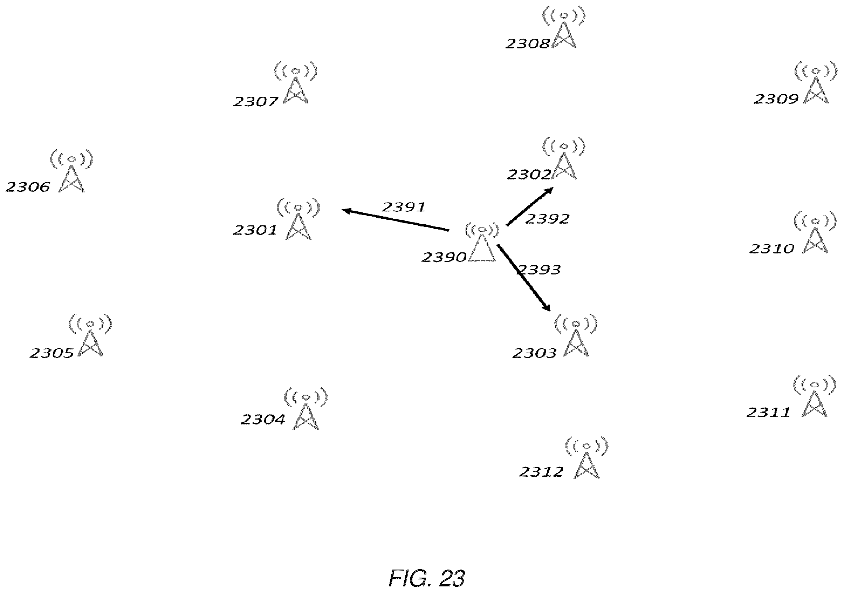

According to an example embodiment of the present disclosure, the location of the interfering radio source ("interferer") can be determined by using the CBOS and a triangulation method implemented by an interference locator module. FIG. 23 illustrates an example of finding the location of the interferer using the CBOS and triangulation. In FIG. 23, let's assume CBSD 2301 initially acts as the center CBSD, which coordinates with its immediate neighboring CBSDs 2302-2307 and measures the interference. Let's also assume CBSD 2301 can measure a substantial signal 2391 from the interferer 2390. Subsequently, let's assume CBSD 2302 is designated (e.g., by a Radio Measurement Controller, which is not explicitly shown in FIG. 23) to act as the center CBSD, and muting/blanking is implemented on its immediate neighboring CBSDs 2301, 2303, and 2207-2210, which leads to the discovery of a significant interference signal 2392. Next, let's assume CBSD 2303 is designated to act as the center CBSD, and muting/blanking is implemented on its immediate neighboring CBSDs 2301, 2302, 2304, and 2210-2212, which leads to the discovery of a significant interference signal 2393. This example process can also continue with cells 2304-2312 each acting as the center cell, but no significant interference would be measured from the interfering radio source ("interferer") 2390. Collectively, the presence of interference signals 2391, 2392 and 2393 would indicate that the interferer 2390 is in the triangular area defined by the CBSDs 2301-2303. For implementing the triangulation to determine the location of the interferer, the interference locator module can be implemented, e.g., as an rApp in the Non-RT RIC. the interference locator module can make the above-described requests to the Radio Measurement Controller to implement multiple interference measurements to locate the interferer, e.g., interferer 2390.

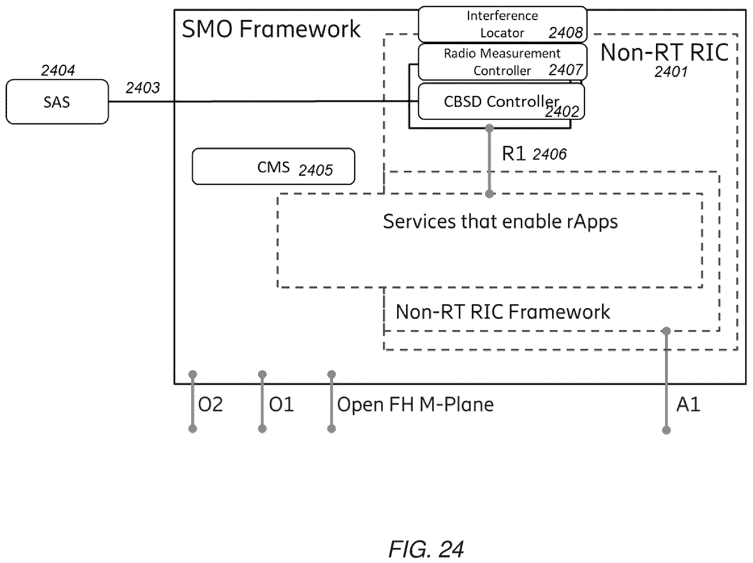

FIG. 24 is a block diagram illustrating the interference locator 2408 implemented as an rApp in the non-RT RIC 2401. The interference locator 2408 can communicate with the Radio Measurement Controller 2407 via, e.g., the R1 interface 2406. Alternative example embodiments of the interference locator can be implemented in configurations substantially similar to the alternative implementations of the Radio Measurement Controller shown in FIGS. 12, 14 and 15, e.g., the interference locator 2408 can be implemented as part of the CBSD Controller, in the SMO Framework, or as an entity in the CMS.

In the following sections, the message formats used by the Radio Measurement Controller will be described. The message formats include: *MeasurementRequestMessage; FrequencyTime; MeasurementReportMessage; MeasurementReport;* and *BlankRequestMessage.*

*MeasurementRequestMessage* is sent by the Radio Measurement Controller to a CBSD to measure its interference. *Measurement Request Message* specifies an array of frequency range and time in the following format: frequency F1-F2, time T1-T2; frequency F3-F4, time T3-T4. The *Measurement Request Message* structure is shown below:

| Parameter | Mandatory (M) / Optional (O) / Conditional (C) | Description |
|---|---|---|
| NAME: cbsdId | M | CBSD Identity |
| DATA TYPE: string | | |
| NAME: MeasurementRequestArray | M | An array of frequency ranges and time to measure. |
| DATA TYPE: array of FrequencyTime | | |

*FrequencyTime* ranges are defined using the structure shown below:

| Parameter | Mandatory (M) / Optional (O) / Conditional (C) | Description |
|---|---|---|
| NAME: Id | M | Frequency-Time array Id. |
| DATA TYPE: integer | | |
| NAME: LowFrequency | M | Low frequency in the range. Unit MHz. |
| DATA TYPE: integer | | |
| NAME: HighFrequency | M | High frequency in the range. Unit MHz. |
| DATA TYPE: integer | | |
| NAME: SFNstart | M | System Frame Number to |
| DATA TYPE: integer | | start. |
| NAME: SFNend | M | System Frame Number to end. |
| DATA TYPE: integer | | |
| NAME: SlotSubFrameStart | M | Slot number (5G) or subframe number (4G) to start. |
| DATA TYPE: integer | | |
| NAME: SlotSubFrameEnd | M | Slot number (5G) or subframe number (4G) to end. |
| DATA TYPE: integer | | |
| NAME: SymbolStart | M | Symbol index to start. |
| DATA TYPE: integer | | |
| NAME: SymbolEnd | M | Symbol index to end. |
| DATA TYPE: integer | | |

*MeasurementReportMessage* is the report sent by the center CBSD to the Radio Measurement Controller. The *Measurement Report Message* structure is shown below:

| Parameter | Mandatory (M) / Optional (O) / Conditional (C) | Description |
|---|---|---|
| NAME: cbsdId | M | CBSD Identity |
| DATA TYPE: string | | |
| NAME: MeasurementReportArray | M | Array of MeasurementReport objects. |
| DATA TYPE: array of object: MeasurementReport | | |

*MeasurementReport* object structure is shown below:

| Parameter | Mandatory (M) / Optional (O) / Conditional (C) | Description |
|---|---|---|
| NAME: id | M | FrequencyTime Id. This matches with the frequency-time array id in the measurementRequest |
| DATA TYPE: integer | | |
| NAME: Power | M | Interference power averaging over the frequency range. Unit dBm per 1 MHz. |
| DATA TYPE: integer | | |

*BlankRequestMessage* is the message sent by the Radio Measurement Controller to each neighboring CBSD to blank its service. *BlankRequestMessage* structure is shown below:

| Parameter | Mandatory (M) / Optional (O) / Conditional (C) | Description |
|---|---|---|
| NAME: cbsdId | M | CBSD Identity |
| DATA TYPE: string | | |
| NAME: BlankRequestArray | M | Array of FrequencyTime objects to blank. |
| DATA TYPE: array of FrequencyTime | | |

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. For example, although the present disclosure has been presented in the context of CBRS, the example system and method can be applied to non-CBRS or typical, licensed, cellular wireless networks directly when the licensed band is either frequency division duplex (FDD) or time division duplex (TDD). Therefore, it is intended that the present disclosure not be limited to the particular embodiment(s) disclosed as the best mode contemplated, but that the disclosure will include all embodiments falling within the scope of the appended claims.

For the sake of completeness, the following list of acronyms are provided:

### ACRONYMS:

- BS:: Base Station
- CBRS:: Citizens Broadband Radio Service
- CBSD:: CBRS Device
- CBOS:: Coordinated Blanking OFDM Symbols
- CMS:: Centralized Management System
- DP:: Domain Proxy
- FDD:: Frequency Division Duplex
- LNA:: Low Noise Amplifier
- LTE:: Long-Term Evolution
- MAC:: Medium Access Control
- NR:: New Radio
- PA:: Power Amplifier
- PHY:: Physical layer
- RIC:: Radio Intelligent Controller
- RU:: Radio Unit
- SAS:: Spectrum Access System
- SMO:: Service Management and Orchestrator
- TDD:: Time Division Duplex
- sf:: subframe
- UE:: User Equipment

## Claims

1. A system for measuring radio interference at a center Citizens Broadband Radio Service (CBRS) device (CBSD) of a selected network operator operating one of a 4G Long Term Evolution (LTE) network or a 5G New Radio (NR) network, comprising:
a radio measurement controller configured to interact with the center CBSD and at least one neighboring CBSD; and
an interference processor associated with the center CBSD;
wherein the radio measurement controller is configured to i) request the center CBSD to perform measurement of radio interference caused by an interfering radio source, and ii) request the at least one neighboring CBSD to stop radio service for at least one coordinated blank orthogonal frequency-division multiplexing symbol (CBOS), wherein the at least one CBOS is defined by a selected frequency range and a selected blanking time in one of a subframe or a slot in one of a time division duplex (TDD) downlink (DL) configuration or a TDD uplink (UL) configuration, and wherein the interference processor associated with the center CBSD is configured to process the measured radio interference.

2. The system of claim 1, wherein the radio measurement controller is configured to:
select a plurality of neighboring CBSDs to stop radio service for at least one CBOS;
receive a report of the measured radio interference from the interference processor associated with the center CBSD.

3. The system of claim 2, wherein the radio measurement controller is configured to:
a)
i)select the center CBSD for measurement of radio interference; and
ii)select the plurality of neighboring CBSDs immediately adjacent to the selected center CBSD for stopping radio service for at least one CBOS; or
b) request a medium access control (MAC) scheduler serving the center CBSD to schedule a measurement of radio interference; or
c) request a medium access control (MAC) scheduler serving the at least one neighboring CBSD to stop radio service for the at least one CBOS.

4. The system of claim 3, wherein the radio measurement controller is configured to send a request to the plurality of neighboring CBSDs for stopping radio service for at least one CBOS based on at least one of the following trigger conditions being satisfied:
one of specified time of the day, week, month or year;
a specified periodicity: and
a specified event comprising at least one of:
i) average downlink (DL) or uplink (UL) Block Error Rate (BLER) is higher than specified DL BLER threshold (dlBlerTh) or specified UL BLER threshold (ulBlerTh), respectively;
ii) average DL or UL throughput is lower than specified DL throughput threshold (dlTpTh) or specified UL throughput threshold (ulTpTh), respectively;
iii) average DL or UL Modulation and Coding Scheme (MCS) is lower than specified DL MCS threshold (dlMcsTh) or specified UL MCS threshold (ulMcsTh), respectively;
iv) average DL or UL Channel Quality Indicator (CQI) is lower than specified DL CQI threshold (dlCqiTh) or specified UL CQI threshold (ulCqiTh), respectively; and
v) average DL or UL Rank Indicator (RI) is lower than specified DL RI threshold (dlRiTh) or specified UL RI threshold (ulRiTh), respectively.

5. The system of claim 3, wherein at least one of:
a) in 4G LTE, the CBOS is configured in one of a downlink subframe, an uplink subframe, a downlink symbol in a special subframe or an uplink symbol in a special subframe; and
b) in 5G NR, the CBOS is configured in one of a downlink slot, an uplink slot, a portion of a downlink slot, a portion of an uplink slot, at least a portion of downlink symbols in a flexible slot, or at least a portion of uplink symbols in a flexible slot

6. The system of claim 3, wherein the radio measurement controller is implemented in one of:
a non-real time radio intelligent controller (non-RT RIC) as an rApp;
a CBSD controller implemented as an rApp;
a service management and orchestrator (SMO) framework; or
a centralized management system implemented as part of the SMO framework.

7. The system of claim 5, wherein the radio measurement controller sequentially selects a plurality of CBSDs to each serve as the center CBSD for measurement of radio interference.

8. The system of claim 7, further comprising:
an interference locator configured to determine the location of the interfering radio source based on the measurements of radio interference implemented by the plurality of CBSDs each serving as the center CBSD.

9. A method for measuring radio interference at a center Citizens Broadband Radio Service (CBRS) device (CBSD) of a selected network operator operating one of a 4G Long Term Evolution (LTE) network or a 5G New Radio (NR) network, comprising:
instructing, by a radio measurement controller, the center CBSD to perform measurement of radio interference caused by an interfering radio source;
instructing, by the radio measurement controller, at least one neighboring CBSD to stop radio service for at least one coordinated blank orthogonal frequency-division multiplexing symbol (CBOS), wherein the at least one CBOS is defined by a selected frequency range and a selected blanking time in one of a subframe or a slot in one of a time division duplex (TDD) downlink (DL) configuration or a TDD uplink (UL) configuration; and
processing, by an interference processor associated with the center CBSD, the measured radio interference.

10. The method of claim 9, wherein the radio measurement controller:
selects a plurality of neighboring CBSDs to stop radio service for at least one CBOS; and
receives a report of the measured radio interference from the interference processor associated with the center CBSD.

11. The method of claim 10, wherein the radio measurement controller:
a)
i)select the center CBSD for measurement of radio interference; and
ii)select the plurality of neighboring CBSDs immediately adjacent to the selected center CBSD for stopping radio service for at least one CBOS; or
b) request a medium access control (MAC) scheduler serving the center CBSD to schedule a measurement of radio interference; or
c) request a medium access control (MAC) scheduler serving the at least one neighboring CBSD to stop radio service for the at least one CBOS.

12. The method of claim 11, wherein the radio measurement controller sends a request to the plurality of neighboring CBSDs for stopping radio service for at least one CBOS based on at least one of the following trigger conditions being satisfied:
one of specified time of the day, week, month or year;
a specified periodicity: and
a specified event comprising at least one of:
i) average downlink (DL) or uplink (UL) Block Error Rate (BLER) is higher than specified DL BLER threshold (dlBlerTh) or specified UL BLER threshold (ulBlerTh), respectively;
ii) average DL or UL throughput is lower than specified DL throughput threshold (dlTpTh) or specified UL throughput threshold (ulTpTh), respectively;
iii) average DL or UL Modulation and Coding Scheme (MCS) is lower than specified DL MCS threshold (dlMcsTh) or specified UL MCS threshold (ulMcsTh), respectively;
iv) average DL or UL Channel Quality Indicator (CQI) is lower than specified DL CQI threshold (dlCqiTh) or specified UL CQI threshold (ulCqiTh), respectively; and
v) average DL or UL Rank Indicator (RI) is lower than specified DL RI threshold (dlRiTh) or specified UL RI threshold (ulRiTh), respectively.

13. The method of claim 11, wherein at least one of:
a) in 4G LTE, the CBOS is configured in one of a downlink subframe, an uplink subframe, a downlink symbol in a special subframe or an uplink symbol in a special subframe; and
b) in 5G NR, the CBOS is configured in one of a downlink slot, an uplink slot, a portion of a downlink slot, a portion of an uplink slot, at least a portion of downlink symbols in a flexible slot, or at least a portion of uplink symbols in a flexible slot.

14. The method of claim 11, wherein the radio measurement controller is implemented in one of:
a non-real time radio intelligent controller (non-RT RIC) as an rApp;
a CBSD controller implemented as an rApp;
a service management and orchestrator (SMO) framework; or
a centralized management system implemented as part of the SMO framework.

15. The method of claim 13, wherein the radio measurement controller sequentially selects a plurality of CBSDs to each serve as the center CBSD for measurement of radio interference.

16. The method of claim 15, further comprising:
determining, by an interference locator, the location of the interfering radio source based on the measurements of radio interference implemented by the plurality of CBSDs each serving as the center CBSD.
